# EUROPÄISCHE PATENTSCHRIFT

(11) **EP 2 104 976 B1**
(45) Veröffentlichungstag und Bekanntmachung des Hinweises auf die Patenterteilung: **13.04.2011**
(21) Anmeldenummer: 07822518.2
(22) Anmeldetag: 13.11.2007
(51) Int. Cl.: H02K 31/02, F04B 17/03

(54) **ELEKTRISCHE MASCHINE**
ELECTRICAL MACHINE
MACHINE ÉLECTRIQUE

(30) Priorität: 19.12.2006 DE 102006059933; 20.06.2007 DE 102007028347
(43) Veröffentlichungstag der Anmeldung: 30.09.2009
(73) Patentinhaber: Robert Bosch GmbH, 70442 Stuttgart (DE)
(72) Erfinder: WILDE, Alexandra, 71065 Sindelfingen (DE); KELLETER, Arndt, 70839 Gerlingen (DE); REUTLINGER, Kurt, 70174 Stuttgart (DE)
(86) Internationale Anmeldenummer: PCT/EP2007/062244
(87) Internationale Veröffentlichungsnummer: WO 2008/074574

(56) Entgegenhaltungen:
- EP-A- 1 655 820
- DE-A1- 2 447 622
- JP-A- 6 062 597
- US-A1- 2006 057 004

## Beschreibung

### Stand der Technik

Die vorliegende Erfindung betrifft eine elektrische Maschine gemäß dem Oberbegriff des Patentanspruchs 1 und eine Pumpe nach Anspruch 15.

Eine solche elektrische Maschine, die auch als synchrone Homopolar- oder Gleichpolmaschine bekannt und beispielsweise in der EP 1 655 820 A2 offenbart ist, umfasst einen Rotor, einen Stator, eine Drehfelderzeugungseinrichtung und eine Polfelderzeugungseinrichtung, wobei der Rotor um eine Drehachse drehbar ist, die durch zwei gegenüberliegende Abschnitte des Rotors hindurchgeht, und wobei die Drehfelderzeugungseinrichtung eingerichtet ist, ein im wesentlichen radiales Magnetfeld zu erzeugen, das sich um die Drehachse des Rotors dreht, und wobei die Polfelderzeugungseinrichtung eingerichtet ist, ein Magnetfeld zu erzeugen, welches den Rotor an den gegenüberliegenden Abschnitten entgegengesetzt polt. Die Polfelderzeugungseinrichtung ist dabei als eine Spule ausgebildet, welche im Stator integriert ist.

Derartige elektrische Maschinen können sich schneller drehen als Maschinen, die einen Kommutator aufweisen, und können somit gemäß der US 2006/0057004 A1 zum Beispiel zur Betätigung einer Pumpe verwendet werden, die pro Pumpzyklus ein kleineres Volumen als eine andere Pumpe pumpt und daher auch kleiner als die andere Pumpe ausgebildet werden kann, aber die gleiche Pumpleistung hat, da sie mit einer höheren Frequenz betrieben werden kann.

Derartige elektrische Maschinen werden daher auch als Verdichterantrieb für Brennstoffzellen in Erwägung gezogen, um Bauraum und Gewicht einzusparen. Ein Nachteil liegt darin, dass die elektrische Maschine zwar die platzsparende Ausbildung einer Pumpe ermöglicht, selbst aber viel Platz beansprucht

### Offenbarung der Erfindung

Der vorliegenden Erfindung liegt die Abgabe zugrunde, eine elektrische Maschine und-eine Pumpe, für welche die Maschine verwendet wird, ohne Leistungseinbußen zu verkleinern. Die der Erfindung zugrunde liegende Aufgabe wird durch eine elektrische Maschine mit den Merkmalen des kennzeichnenden Teils des Patentanspruchs 1 und eine Pumpe für eine elektrische Maschine mit den Merkmalen des Patentanspruchs 15 gelöst.

Die Erfindung betrifft eine elektrische Maschine mit einem Rotor, einem Stator, einer Drehfelderzeugungseinrichtung und einer Polfelderzeugungseinrichtung, wobei der Rotor um eine Drehachse drehbar ist, die durch zwei gegenüberliegende Abschnitte des Rotors hindurchgeht. Die Drehfelderzeugungseinrichtung ist eingerichtet, ein im wesentlichen radiales Magnetfeld zu erzeugen, das sich um die Drehachse des Rotors dreht. Die Polfelderzeugungseinrichtung umfasst mindestens einen Magneten und ist eingerichtet, ein Magnetfeld zu erzeugen, welches den Rotor an den gegenüberliegenden Abschnitten entgegengesetzt polt. Erfindungsgemäß ist vorgesehen, dass gegenüberliegende Außenflächen des ersten Abschnitts relativ zu gegenüberliegenden Außenflächen des zweiten Abschnitts derart um 90 Grad gedreht sind, dass Magnetpole am zweiten Abschnitt gegenüber Magnetpolen am ersten Abschnitt um 90 Grad versetzt sind, wobei die Magnetpole (N, S) des ersten und des zweiten Abschnitts (5, 6) eine entgegengesetze Polarität aufweisen. Vorteilhafterweise wird Energie eingespart, da zur Erzeugung des Magnetfelds, welches den Rotor an den gegenüberliegenden Abschnitten entgegengesetzt polt, kein Strom erforderlich ist.

In einer bevorzugten Ausführungsform sind die Außenflächen der beiden gegenüberliegenden Abschnitte aus jeweils zwei gegenüberliegenden, runden Außenflächen und jeweils zwei gegenüberliegenden, ebenen, parallelen Aüßenflächen gebildet. Weiterhin ist vorgesehen, dass der Stator zwei Statorelemente umfasst, die entlang der Drehachse angeordnet sind. Vorteilhafterweise kann der Raum, der zwischen den zwei Statorelementen vorhanden sein muss, genutzt werden, um den Magneten unterzubringen. Wärme kann von dem Magneten leicht zu den zwei Statorelementen des Stators abgeführt werden. Außerdem ist der Magnet vor Gegenfelder durch die zwei Statorelemente geschützt, so dass eine Entmagnetisierung verhindert werden kann. In einer Weiterbildung der bevorzugten Ausführungsform ist ein Gehäuse vorgesehen, das nicht magnetisch ist. Vorteilhafterweise kann ein magnetischer Kurzschluss durch das Gehäuse vermieden werden.

In noch einer bevorzugten Ausführungsform ist der mindestens eine Magnet als Holzylinder ausgebildet, welcher eines der zwei Statorelemente umgibt, wobei ein weiterer als Holzylinder ausgebildeter Magnet das andere der zwei Statorelemente umgibt.

Vorteilhafterweise kann Wärme von den Magneten leicht zu den Statorelementen abgeführt werden. Außerdem sind die Magnete vor Gegenfelder durch die Statorelemente geschützt, so dass eine Entmagnetisierung verhindert werden kann. Aufgrund der großen Berührungsfläche zwischen den Statorelementen und den Magneten können preisgünstige Ferritmagnete ein ausreichendes Magnetfeld erzeugen. In einer Weiterbildung der bevorzugten Ausführungsform ist ein Gehäuse vorgesehen, das magnetisch ist. Vorteilhafterweise kann der magnetische Widerstand dadurch verringert werden, dass die magnetischen Feldlinien fast vollkommen durch einen magnetischen Werkstoff verlaufen.

In noch einer bevorzugten Ausführungsform ist der mindestens eine Magnet quaderförmig ausgebildet und außen an einem der zwei Statorelemente angeordnet. Es ist ein weiterer quaderförmiger Magnet vorgesehen, der außen an dem anderen der zwei Statorelemente angeordnet ist. Vorteilhafterweise kann Wärme von den Magneten leicht zu den Statorelementen abgeführt werden. Außerdem sind die Magnete vor Gegenfelder durch die Statorelemente geschützt, so dass eine Entmagnetisierung verhindert werden kann. Eine quaderförmige Gestalt kann außerdem leicht und daher preisgünstig hergestellt werden. Toleranzen zwischen Statorelementen und den Magneten sind zudem kaum von Bedeutung.

In einer Weiterbildung der bevorzugten Ausführungsform umfasst die Polfelderzeugungseinrichtung noch weitere quaderförmige Magnete, die außen an den Statorelementen vorgesehen sind. Vorteilhafterweise kann durch mehrere quaderförmige Magnete ein zu der Drehachse symmetrisches Magnetfeld erzeugt werden. In noch einer Weiterbildung der bevorzugten Ausführungsform ist ein Gehäuse vorgesehen, das magnetisch ist. Vorteilhafterweise kann der magnetische Widerstand dadurch verringert werden, dass die magnetischen Feldlinien fast vollkommen durch einen magnetischen Werkstoff verlaufen.

In einer Weiterbildung der bevorzugten Ausführungsformen besteht jedes Statorelemente aus mehreren ringförmigen Teilen. Vorteilhafterweise können die Abmessungen der Statorelemente bei hoher Leistungsfähigkeit der Maschine so weit verringert werden, dass diese durch Pressen von weichmagnetischem Material in ausreichender Qualität hergestellt werden können.

In noch einer bevorzugten Ausführungsform besteht der Stator aus einem weichmagnetischen Verbundwerkstoff. Vorteilhafterweise können Wirbelstromverluste im Stator verringert werden. Ein solcher Stator weist außerdem in allen Richtungen annährend identische magnetische Eigenschaften auf. Gegenüber lamellierten Statoren ist der magnetische Widerstand in axialer Richtung quer zu den Lamellen zudem deutlich kleiner, was zu einer Verbesserung der Leistungsfähigkeit führt.

Vorteilhafterweise können die Abmessungen der Statorelemente bei hoher Leistungsfähigkeit der Maschine so weit verringert werden, dass diese durch Pressen von weichmagnetischem Material in ausreichender Qualität hergestellt werden können.

In noch einer bevorzugten Ausführungsform umfasst die elektrische Maschine einen weiteren Rotor, einen weiteren Stator, eine weitere Drehfelderzeugungseinrichtung, und eine weitere Polfelderzeugungseinrichtung, wobei der weitere Rotor um die Drehachse drehbar ist, die durch zwei weitere gegenüberliegende Abschnitte des weiteren Rotors hindurchgeht, wobei die weitere Polfelderzeugungseinrichtung eingerichtet ist, ein weiteres Magnetfeld zu erzeugen, welches den weiteren Rotor an den weiteren gegenüberliegenden Abschnitten entgegengesetzt polt, und wobei die weitere Polfelderzeugungseinrichtung mindestens einen Magnet umfasst.

Die elektrische Maschine kann sowohl als elektrischer Motor als auch als Generator zur Abgabe elektrischer Energie verwendet werden.

### Kurze Beschreibung der Zeichnungen

Im folgenden wird die Erfindung mit Bezugnahme auf die Zeichnungen näher beschrieben. Es zeigen:
FIG. 1A eine Ansicht einer elektrischen Maschine mit einem Magneten zwischen zwei Statorelementen eines Stators;
FIG. 1B eine Schnittansicht der elektrischen Maschine aus FIG. 1A entlang dessen Drehachse;
FIG. 1C eine weitere Ansicht der elektrischen Maschine aus FIG. 1A und den Feldlinienverlauf des durch eine Polfelderzeugungseinrichtung erzeugten Magnetfelds;
FIG. 2A eine Ansicht einer elektrischen Maschine mit hohlzylindrischen Magneten, welche den Stator umgeben;
FIG. 2B eine Schnittansicht der elektrischen Maschine aus FIG. 2A entlang dessen Drehachse;
FIG. 3A eine Ansicht einer elektrischen Maschine mit mehreren Magneten, welche den Stator umgeben;
FIG. 3B eine Schnittansicht der elektrischen Maschine aus FIG. 3A entlang dessen Drehachse;
FIG. 4 eine Schnittansicht einer elektrischen Doppelmaschine entlang dessen Drehachse; und
FIG. 5 eine Schnittansicht einer elektrischen Maschine, wobei jedes Statorelement aus mehreren Teilen besteht.

### Ausführungsformen der Erfindung

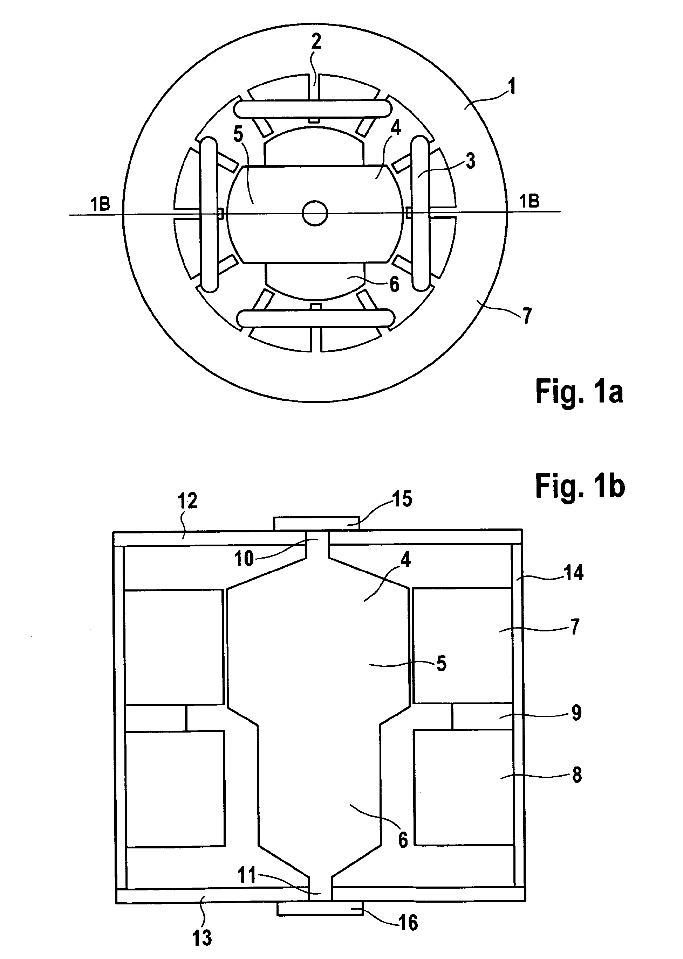

FIG. 1A zeigt eine Ansicht einer elektrischen Maschine mit einem Magnet zwischen zwei baugleichen Statorelementen eines Stators 1 senkrecht zu der Drehachse eines Rotors 4. Die zwei Statorelemente sind entlang der Drehachse übereinander angeordnet. In dieser Ansicht verdeckt das obere 7 der zwei Statorelemente das untere der zwei Statorelemente und den Magnet, der als Polfelderzeugungseinrichtung wirkt. Das Gehäuse ist nicht dargestellt. Die Statorelemente bestehen für diese und die weiteren Ausführungsformen aus einem weichmagnetischen Werkstoff, vorzugsweise einem weichmagnetischen Verbundwerkstoff (soft magnetic composite, SMC) wie gepreßtem oxidierten Eisenpulver, um Wirbelströme zu unterdrücken. Die Statorelemente können direkt in die Form gepreßt werden oder nach dem Pressen durch Funkenerosion geformt werden. Die Statorelemente haben eine hohlzylindrische Form, wobei an ihren inneren Umfängen 12 Vorsprünge 2 radial nach innen hervorstehen. Um jeweils 3 übereinander angeordnete Vorsprünge 2 der beiden Statorelemente (also insgesamt 6 Vorsprünge) ist eine Spule 3 gewickelt. Insgesamt sind der Einfachheit wegen 4 Spulen dargestellt, die dazu dienen, ein Magnetfeld zu erzeugen, welches sich um die Drehachse des Rotors 4 dreht. Gebräuchlich sind 12 Spulen, die jeweils um einen der 12 Vorsprünge versetzt um 3 Vorsprünge gewickelt sind, so daß jeder Vorsprung von 3 Spulen umgeben ist. Der Rotor 4 besteht ebenfalls aus einem weichmagnetischen Material, ist im Inneren des Stators 1 drehbar gelagert und umfaßt entlang seiner Drehachse einen oberen Abschnitt 5 und einen unteren Abschnitt 6. Jeder Abschnitt 5, 6 umfaßt zwei gegenüberliegende runde Außenflächen, die jeweils nahe bei den nach innen hervorstehenden Vorsprüngen 2 des oberen Statorelements 7 bzw. des unteren Statorelements liegen, so daß nur ein enger Spalt zwischen diesen Vorsprüngen 2 und den gegenüberliegenden Abschnitten 5, 6 ausgebildet ist. Zwischen den zwei gegenüberliegenden runden Außenflächen eines jeden Abschnitts 5, 6 sind jeweils zwei gegenüberliegende ebene parallele Außenflächen ausgebildet. Die gegenüberliegenden Außenflächen des Abschnitts 6 sind relativ zu den gegenüberliegenden Außenflächen des Abschnitts 5 um 90 Grad gedreht. Statt der hier beschriebenen vierpoligen Maschine kann eine Maschine mit einer beliebigen anderen Anzahl von Polen und Vorsprüngen verwendet werden wie aus dem Stand der Technik bekannt.

FIG. 1B zeigt eine Schnittansicht der elektrischen Maschine aus FIG. 1A entlang dessen Drehachse. Die entsprechende Schnittlinie ist in FIG. 1A als Linie 1B-1B dargestellt. Die Spulen 3 sind nicht dargestellt. Zwischen den zwei zylindrischen Statorelementen 7,8 des Stators 1 ist ein ringförmiger Magnet 9 angeordnet, der ein Magnetfeld erzeugt, welches den Rotor 4 an dem oberen Abschnitt 5 und dem unteren Abschnitt 6 entgegengesetzt polt. Der Magnet 9 kann aus mehreren Teilmagneten, z.B. zwei halbringförmigen Magnetschalen, zusammengesetzt sein. An dem Magnet 9 können auch Vorsprünge ausgebildet sein, die zwischen den Vorsprüngen 2 der beiden Statorelemente ausgebildet sind. An den gegenüberliegenden Enden des Rotors 4 sind ein oberer Achszapfen 10 und ein unterer Achszapfen 11 einstückig mit dem Rotor 4 ausgebildet. Die Achszapfen 10, 11 sind in einem oberen bzw. unteren Gehäusedeckel 12, 13 gelagert, die an den gegenüberliegenden Enden eines zylindrischen Gehäuses 14 befestigt sind. Das Gehäuse 14 ist nicht magnetisch, um einen magnetischen Kurzschluß durch das Gehäuse 14 zu verhindern. In der Mitte des oberen und unteren Gehäusedeckels 12, 13 sitzt jeweils eine obere bzw. untere Endkappe 15, 16, welche ein Lager abdeckt. Einer oder beide Achszapfen 10, 11 können auch in eine Welle (nicht gezeigt) übergehen, die außerhalb des Gehäuses 14 vorgesehen ist, um das Drehmoment der Maschine an eine Pumpe auf bekannte Weise zu übertragen. Die Pumpe wird beispielsweise in einer Turbine eines Verdichterantriebs für eine Brennstoffzelle verwendet. Der obere Abschnitt 5 ist entlang seines großen Querschnitts von einer abgerundeten Außenfläche zu der gegenüberliegenden abgerundeten Außenfläche dargestellt, während der untere Abschnitt 6 entlang seines kleinen Querschnitts von einer ebenen Außenfläche zu der gegenüberliegenden Außenfläche dargestellt ist. Entlang einer Line, die um 90 Grad gegenüber der Linie 1B-1B um die Drehachse gedreht ist, ergibt sich für den Rotor 4 ein Querschnitt, für den der obere Abschnitt 5 so ausgebildet ist wie der untere Abschnitt 6 in FIG. 1B und für den der untere Abschnitt 5 so ausgebildet ist wie der obere Abschnitt 6 in FIG. 1B.

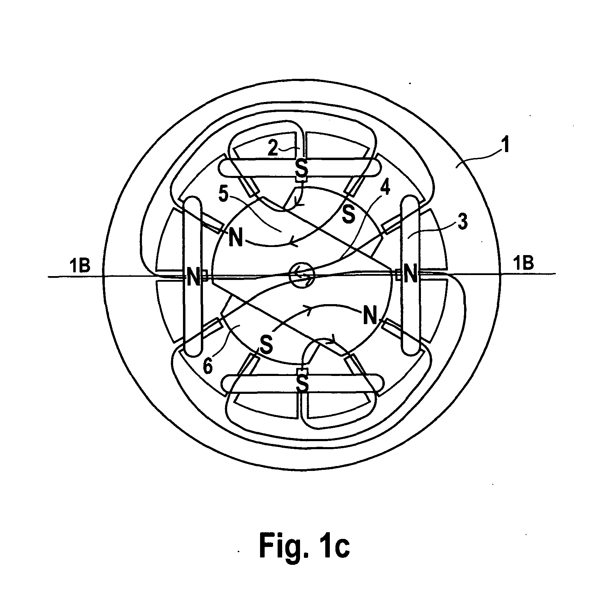

FIG. 1C zeigt eine weitere Ansicht der elektrischen Maschine aus FIG. 1A und den Feldlinienverlauf des durch den Magneten 9 erzeugten Magnetfelds. Der Rotor 4 ist jedoch gegenüber der Position aus FIG. 1A in einer gedrehten Position dargestellt. Es ist lediglich die Komponente des Magnetfelds senkrecht zu der Drehachse des Rotors 4 dargestellt. Die Magnetfeldlinien treten über die nach innen ragenden Vorsprünge 2 des Stators 1 in den unteren Abschnitt 5 des Rotors 4 ein, so daß am unteren Abschnitt 6 des Rotors 4 zwei gegenüberliegende Magnetpole S ausgebildet sind. Die Magnetfeldlinien treten über zwei gegenüberliegenden Enden des oberen Abschnitts 5 wieder in die nach innen ragenden Vorsprünge 2 des Stators 1 ein, so daß am oberen Ende des Rotors 4 zwei gegenüberliegende Magnetpole N ausgebildet sind. Der Magnetfluß verläuft fast ausschließlich durch die Vorsprünge 2, die nahe an den Stator 4 grenzen. Aufgrund des Aufbaus des Rotors 4 sind die Magnetpole S am unteren Abschnitt 6 des Rotors 4 dabei gegenüber den Magnetpolen N am oberen Abschnitt 5 des Rotors 4 um 90 Grad versetzt. Durch Anlegen eines Stroms mit geeigneter Richtung lassen sich auf den nach innen weisenden Seiten der Spulen 2 abwechselnd Magnetpole N und S ausbilden, die so angeordnet sind, daß sie die Magnetpole N, S des Rotors in Richtung des Uhrzeigersinns anziehen bzw. abstoßen. Wenn sich der Rotor 4 soweit im Uhrzeigersinn gedreht hat, daß ein Magnetpol S des Rotors 4 jeweils genau einem nach innen weisenden Magnetpol N einer Spule 3 gegenüberliegt und ein Magnetpol N des Rotors 4 jeweils genau einem nach innen weisenden Magnetpol S einer Spule 3 gegenüberliegt, wird die Stromrichtung in den Spulen 3 geändert. Dadurch werden die Magnetpole des Rotors 4 weiter abgestoßen bzw. angezogen, so daß sich der Rotor 4 weiter im Uhrzeigersinn dreht.

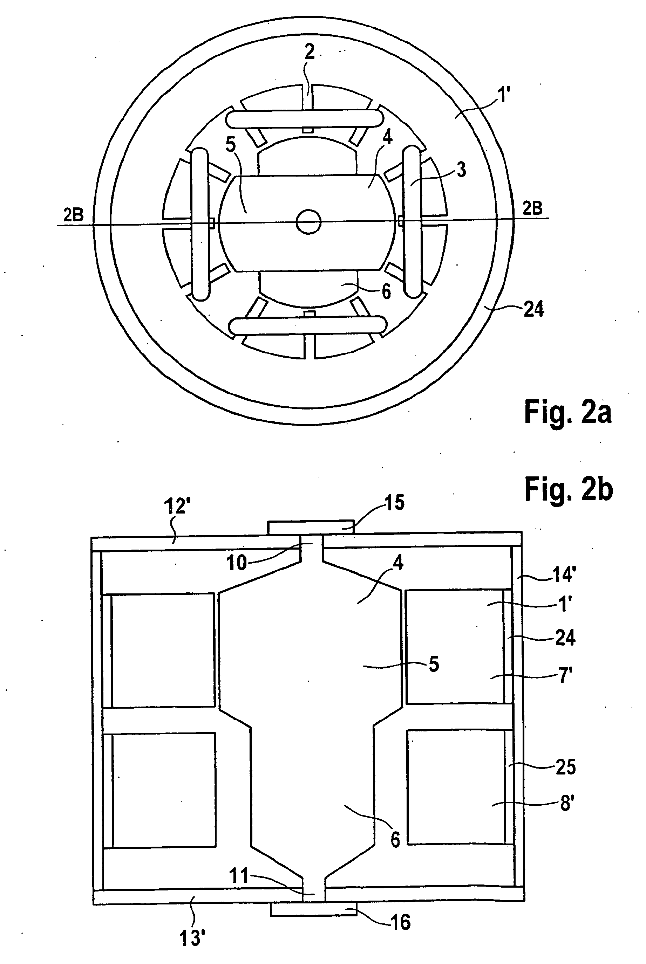

Die folgenden elektrischen Maschinen aus FIG. 2A, 2B bzw.

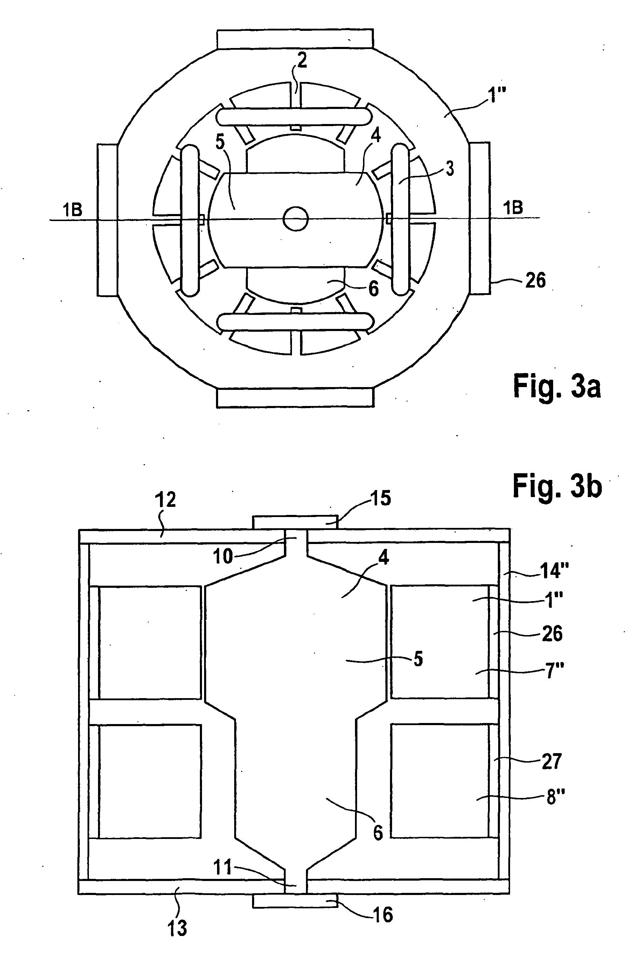

FIG. 3A, 3B unterscheiden sich von der elektrischen Maschine aus FIG. 1A und FIG. 1B durch den oder die Magnete, welche das Magnetfeld zum Polen des Rotors erzeugen. Im folgenden werden für identische Elemente identische Bezugszeichen verwendet, und werden für abgeänderte Elemente identische Bezugszeichen verwendet, die mit einem, zwei oder drei Strichen versehen sind.

FIG. 2A zeigt eine Ansicht einer elektrischen Maschine mit hohlzylindrischen Magneten 24, 25 (verdeckt), welche das Magnetfeld zum Polen des Rotors 4 erzeugen. Die Magnete 24, 25 können auch aus mehreren Teilmagneten, wie z.B. zwei Halbringen, zusammengesetzt sein. FIG. 2B zeigt eine Schnittansicht der elektrischen Maschine aus FIG. 2A entlang dessen Drehachse. Die entsprechende Schnittlinie ist in FIG. 2A als Linie 2B-2B dargestellt. Die Spulen 3 sind nicht dargestellt. Der Stator 1' besteht aus zwei ringförmigen Statorelementen 7', 8', die jeweils von dem Magnet 24 bzw. 25 umgeben sind. Die Magnete 24, 25 sind radial und entgegengesetzt gepolt. Zwischen den zwei ringförmigen Statorelementen 7', 8' ist ein Luftspalt ausgebildet, um einen magnetischen Kurzschluß zwischen den Statorelementen 7', 8' zu vermeiden. Das Gehäuse 14' besteht aus einem magnetischem Material, um den magnetischen Widerstand durch Bilden einer magnetischen Brücke durch das Gehäuse 14' zu verringern. Es ist möglich, nur einen der Magnete 24, 25 zu verwenden und auf den anderen Magnet zu verzichten.

FIG. 3A zeigt eine Ansicht einer elektrischen Maschine mit mehreren Magneten 26, 27 (verdeckt), welche das Magnetfeld zum Polen des Rotors 4 erzeugen. Die Magnete 26, 27 sind quaderförmig ausgebildet. Die Stellen des ansonsten außen runden Statorelemente des Stators 1", wo die Magnete 26, 27 an den Statorelementen des Stators 1" anliegen, sind abgeflacht, um einen guten Kontakt zwischen dem Stator 1'' und den Magneten 26, 27 zu ermöglichen. Die Anzahl der Magnete 26, 27 ist beliebig. Jedoch sollten die Magnete 26, 27 symmetrisch angeordnet sein, um ein entsprechendes symmetrisches Magnetfeld zu erzeugen. FIG. 3B zeigt Schnittansicht der elektrischen Maschine aus FIG. 3A entlang dessen Drehachse. Der Stator 1" besteht aus zwei ringförmigen Statorelementen 7", 8", die jeweils von mehreren Magneten 26 bzw. 27 umgeben sind. Die Magnete 26, 27 sind radial gepolt. Die Magnete 26 sind entgegengesetzt zu den Magneten 27 gepolt. Zwischen den zwei ringförmigen Statorelementen 7", 8" ist ein Luftspalt ausgebildet, um einen magnetischen Kurzschluß zwischen den Statorelementen 7", 8" zu vermeiden. Das Gehäuse 14" besteht aus einem magnetischen Material, um den magnetischen Widerstand durch Bilden einer magnetischen Brücke durch das Gehäuse 14" zu verringern. Es ist möglich, nur einen der Magnete 26, 27 zu verwenden und auf den anderen Magnet zu verzichten.

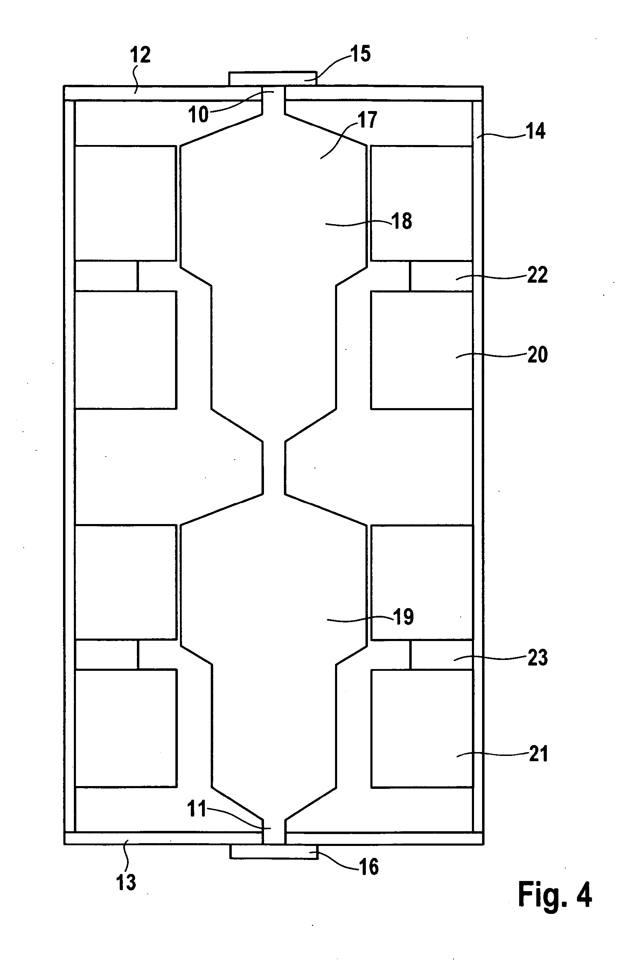

FIG. 4 zeigt eine Schnittansicht einer elektrischen Doppelmaschine entlang deren Drehachse. Der Doppelrotor 17 besteht aus zwei Rotoren 18 und 19, die einstückig ausgebildet sind und jeweils den gleichen Aufbau wie der Rotor 4 aus den vorhergehenden Figuren haben. Dabei sind die zwei Rotoren 18, 19 an so miteinander verbunden, daß die miteinander verbundenen Abschnitte gleich ausgerichtet sind und ein Statorelement 20 verwendet werden kann, um beide miteinander verbundenen Abschnitte zu polen. Der Stator umfaßt zwei weitere Statorelemente 21, die von dem Statorelement 20 jeweils durch Magnete 22 bzw. 23 getrennt sind. Alternativ können auch Statoren und Magnete verwendet werden, die aus den FIG. 2A, 2B bzw. 3A, 3B bekannt sind, wobei zwei aneinandergrenzende Statorelemente wie in FIG. 4 einstückig ausgebildet sind.

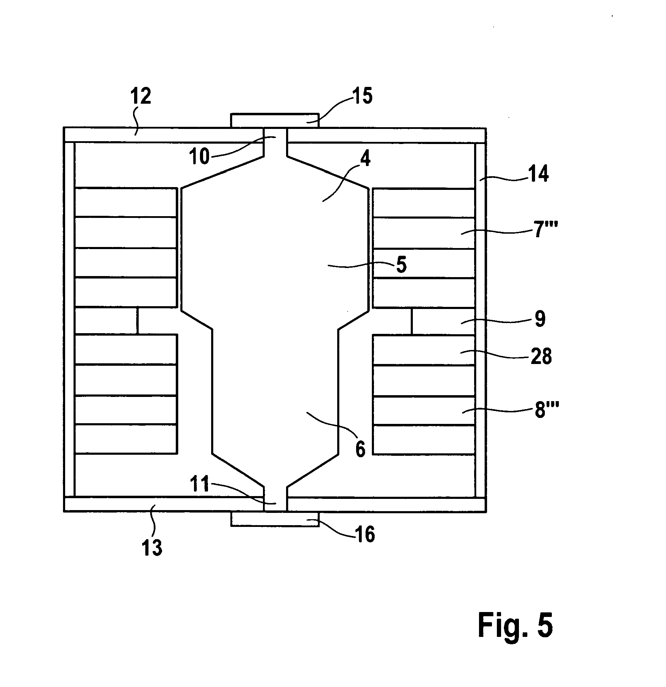

FIG. 5 zeigt eine Schnittansicht einer elektrischen Maschine, wobei jedes Statorelement 8"' aus mehreren ringförmigen Teilen 28 besteht.

Die in den Figuren 1 bis 5 gezeigten, elektrischen Maschinen können sowohl als Motor als auch als Generator zur Erzeugung elektrischer Energie eingesetzt werden.

## Patentansprüche

1. Eiektrische Maschine mit einem Rotor (4), einem Stator (1, 1',1", 20), einer Drehfelderzeugungseinchtung (3) und einer Polfelderzeugungseinrichtung (9, 22, 24, 25, 26,27), wobei der Rotor (4,18) um eine Drehachse drehbar ist, die durch zwei gegenüberliegende Abschnitte (5,6) des Rotors (4, 18) hindurchgeht, wobei die Drehfelderzeugungseinrichtung (3) eingerichtet ist, ein im wesentlichen radiales Magnetfeld zu erzeugen, das sich um die Drehachse des Rotors (4) dreht, wobei die Polfelderzeugungseinnchtung (9, 22, 24, 25, 26, 27) mindestens einen Magneten (9, 22, 24, 25, 26, 27) umfasst und eingerichtet ist, ein Magnetfeld zu erzeugen, welches den Rotor (4) an den gegenüberliegenden Abschnitten (5, 6) entgegengesetzt polt, **dadurch gekennzeichnet, dass** gegenüberliegende Außenflächen des ersten Abschnitts (5) relativ zu gegenüberliegenden Außenflächen des zweiten Abschnitts (6) derart um 90 Grad gedreht sind, dass Magnetpole (S) am zweiten Abschinitt (6) gegenüber Magnetpolen (N) am ersten Abschnitt (5) um 90 Grad versetzt sind, wobei die Magnetpole (N) des ersten Abschnitts (5) eine entgegengesetze Polarität zu den Magnetpolen (5) des zweiten Abschnitts (6) aufweisen.

2. Elektrische Maschine nach Anspruch 1, **dadurch gekennzeichnet, dass** die Außenflächen der beiden gegenüberliegenden Abschnitte (5, 6) aus jeweils zwei gegenüberliegenden, runden Außenflächen und jeweils zwei gegenüberliegenden, ebenen, parallelen Außenflächen gebildet sind.

3. Elektrische Maschine nach Anspruch 1, **dadurch gekennzeichnet, dass** der Stator (1) zwei Statorelemente (7, 8) umfasst, die entlang der Drehachse angeordnet sind.

4. Elektrische Maschine nach Anspruch 3, **dadurch gekennzeichnet, dass** der mindestens eine Magnet (9) zwischen den zwei Statorelementen (7, 8) angeordnet ist.

5. Elektrische Maschine nach Anspruch 4, **dadurch gekennzeichnet, dass** ein Gehäuse (14) vorgesehen ist, das nicht magnetisch ist.

6. Elektrische Maschine nach Anspruch 3, **dadurch gekennzeichnet, dass** der mindestens eine Magnet (24) als Holzylinder ausgebildet ist, welcher eines der zwei Statorelemente (7') umgibt, und dass ein weiterer als Holzylinder ausgebildeter Magnet (25) das andere (8') der zwei Statorelemente umgibt.

7. Elektrische Maschine nach Anspruch 6, **dadurch gekennzeichnet, dass** ein Gehäuse (14') vorgesehen ist, das magnetisch ist.

8. Elektrische Maschine nach Anspruch 3, **dadurch gekennzeichnet, dass** der mindestens eine Magnet (26) quaderförmig ausgebildet ist und außen an einem der zwei Statorelemente (7") angeordnet ist, dass ein weiterer Magnet (27) vorgesehen ist, der quaderförmig ausgebildet ist und außen an dem anderen (8") der zwei Statorelemente angeordnet ist.

9. Elektrische Maschine nach Anspruch 8, **dadurch gekennzeichnet, dass** die Polfelderzeugungseinrichtung noch weitere quaderförmige Magnete (26, 27) umfasst, die außen an den Statorelementen (7", 8") vorgesehen sind.

10. Elektrische Maschine nach Anspruch 8 oder 9, **dadurch gekennzeichnet, dass** ein Gehäuse (14") vorgesehen ist, das magnetisch ist.

11. Elektrische Maschine nach einem der vorhergehenden Ansprüche, **dadurch gekennzeichnet, dass** jedes Statorelement (7"', 8"') aus mehreren ringförmigen Teilen (28) besteht.

12. Elektrische Maschine nach einem der vorhergehenden Ansprüche, **dadurch gekennzeichnet, dass** der Stator (1, 1', 1", 20) aus einem weichmagnetischen Verbundwerkstoff besteht.

13. Elektrische Maschine nach einem der vorhergehenden Ansprüche, **gekennzeichnet durch** einen weiteren Rotor (19), einen weiteren Stator (21), eine weitere Drehfelderzeugungseinrichtung, und eine weitere Polfelderzeugungseinrichtung (23), wobei der weitere Rotor (19) um die Drehachse drehbar ist, die **durch** zwei weitere gegenüberliegende Abschnitte des weiteren Rotors hindurchgeht, wobei die weitere Polfelderzeugungseinrichtung (23) eingerichtet ist, ein weiteres Magnetfeld zu erzeugen, welches den weiteren Rotor (19) an den weiteren gegenüberliegenden Abschnitten entgegengesetzt polt, und wobei die weitere Polfelderzeugungseinrichtung mindestens einen Magnet (23) umfasst.

14. Elektrische Maschine nach einem der vorhergehenden Ansprüche, **gekennzeichnet durch** die Verwendung der elektrischen Maschine als elektrischer Motor oder als elektrischer Generator.

15. Pumpe mit einer als elektrischen Motor betriebenen elektrischen Maschine nach einem der Ansprüche 1 bis 13.

## Claims

1. Electrical machine having a rotor (4), having a stator (1, 1', 1", 20) having a rotating-field production device (3) and having a pole-field production device (9, 22, 24, 25, 26, 27) wherein the rotor (4, 18) can rotate about a rotation axis which passes through two opposite sections (5, 6) of the rotor (4, 18), wherein the rotating-field production device (3) is designed to produce a substantially radial magnetic field which rotates about the rotation axis of the rotor (4), wherein the pole-field production device (9, 22, 24, 25, 26, 27) comprises at least one magnet (9, 22, 24, 25, 26, 27) and is designed to produce a magnetic field of opposite polarity to the rotor (4) on the opposite sections (5, 6), **characterized in that** opposite outer surfaces of the first section (5) are rotated through 90 degrees relative to opposite outer surfaces of the second section (6), such that magnetic poles (S) on the second section (6) are offset through 90 degrees with respect to magnetic poles (N) on the first section (5), wherein the magnetic poles (N) on the first section (5) are of opposite polarity to the magnetic poles (S) on the second section (6).

2. Electrical machine according to Claim 1, **characterized in that** the outer surfaces of the two opposite sections (5, 6) are each formed from two opposite, round outer surfaces and in each case two opposite, planar, parallel outer surfaces.

3. Electrical machine according to Claim 1, **characterized in that** the stator (1) has two stator elements (7, 8) which are arranged alongside the rotation axis.

4. Electrical machine according to Claim 3, **characterized in that** the at least one magnet (9) is arranged between the two stator elements (7, 8).

5. Electrical machine according to Claim 4, **characterized in that** a housing (14) which is non-magnetic is provided.

6. Electrical machine according to Claim 3, **characterized in that** the at least one magnet (24) is in the form of a hollow cylinder which surrounds one of the two stator elements (7'), and **in that** a further magnet (25) which is in the form of a hollow cylinder surrounds the other (8') of the two stator elements.

7. Electrical machine according to Claim 6, **characterized in that** a housing (14') which is magnetic is provided.

8. Electrical machine according to Claim 3, **characterized in that** the at least one magnet (26) is cuboid and is arranged on the outside of one of the two stator elements (7"), **in that** a further magnet (27) is provided, which is cuboid and is arranged on the outside on the other (8") of the two stator elements.

9. Electrical machine according to Claim 8, **characterized in that** the pole-field production device also has further cuboid magnets (26, 27), which are provided on the outside on the stator elements (7" , 8").

10. Electrical machine according to Claim 8 or 9, **characterized in that** a housing (14") which is magnetic is provided.

11. Electrical machine according to one of the preceding claims, **characterized in that** each stator element (7"' , 8''') consists of a plurality of annular parts (28).

12. Electrical machine according to one of the preceding claims, **characterized in that** the stator (1, 1', 1", 20) is composed of a soft-magnetic composite material.

13. Electrical machine according to one of the preceding claims, **characterized by** a further rotor (19), a further stator (21), a further rotating-field production device, and a further pole-field production device (23), wherein the further rotor (19) can rotate about the rotation axis which passes through two further opposite sections of the further rotor, wherein the further pole-field production device (23) is designed to produce a further magnetic field which is of opposite polarity to the further rotor (19) on the further opposite sections, and wherein the further pole-field production device comprises at least one magnet (23).

14. Electrical machine according to one of the preceding claims, **characterized by** the use of the electrical machine as an electric motor or as an electrical generator.

15. Pump having an electrical machine operated as an electric motor according to one of Claims 1 to 13.

## Revendications

1. Machine électrique dotée d'un rotor (4), d'un stator (1, 1', 1", 20), d'un dispositif (3) de production d'un champ tournant et d'un dispositif (9, 22, 24, 25, 26, 27) de production d'un champ polaire,
le rotor (4, 18) pouvant tourner autour d'un axe de rotation qui traverse deux parties opposées (5, 6) du rotor (4, 18),
le dispositif (3) de production d'un champ tournant étant conçu pour produire un champ magnétique essentiellement radial qui tourne autour de l'axe de rotation du rotor (4),
le dispositif (9, 22, 24, 25, 26, 27) de production d'un champ polaire comprenant au moins un aimant (9, 22, 24, 25, 26, 27) et étant conçu pour produire un champ magnétique qui polarise le rotor (4) en des sens opposés sur les parties opposées (5, 6), **caractérisée en ce que**
des surfaces extérieures opposées de la première partie (5) sont tournées de 90 degrés par rapport aux surfaces extérieures opposées de la deuxième partie (6) de telle sorte que les pôles magnétiques (S) de la deuxième partie (6) soient décalés de 90 degrés par rapport aux pôles magnétiques (N) de la première partie (5) et
**en ce que** la polarité des pôles magnétiques (N) de la première partie (5) est opposée à celle des pôles magnétiques (S) de la deuxième partie (6).

2. Machine électrique selon la revendication 1, **caractérisée en ce que** les surfaces extérieures des deux parties opposées (5, 6) sont formées chacune de deux surfaces extérieures rondes opposées et de deux surfaces extérieures planes parallèles opposées.

3. Machine électrique selon la revendication 1, **caractérisée en ce que** le stator (1) comporte deux éléments de stator (7, 8) disposés le long de l'axe de rotation.

4. Machine électrique selon la revendication 3, **caractérisée en ce que** le ou les aimants (9) sont disposés entre les deux éléments de stator (7, 8).

5. Machine électrique selon la revendication 4, **caractérisée en ce qu'**elle présente un boîtier (14) non magnétique.

6. Machine électrique selon la revendication 3, **caractérisée en ce que** le ou les aimants (24) sont configurés en cylindres creux qui entourent l'un des deux éléments de stator (7') et **en ce qu'**un autre aimant (25) configuré en cylindre creux entoure l'autre (8') des deux éléments de stator.

7. Machine électrique selon la revendication 6, **caractérisée en ce qu'**elle présente un boîtier (14') magnétique.

8. Machine électrique selon la revendication 3, **caractérisée en ce que** le ou les aimants (26) sont configurés en parallélépipèdes et sont disposés à l'extérieur sur l'un des deux éléments de stator (7'') et **en ce qu'**elle présente un autre aimant (27) configuré en parallélépipède et disposé à l'extérieur sur l'autre (8") des deux éléments de stator.

9. Machine électrique selon la revendication 8, **caractérisée en ce que** le dispositif de production d'un champ polaire comporte encore d'autres aimants (26, 27) en forme de parallélépipède prévus à l'extérieur sur les éléments de stator (7'', 8'').

10. Machine électrique selon la revendication 8 ou 9, **caractérisée en ce qu'**elle présente un boîtier (14") magnétique.

11. Machine électrique selon l'une des revendications précédentes, **caractérisée en ce que** chaque élément de stator (7"', 8"') est constitué de plusieurs parties annulaires (28).

12. Machine électrique selon l'une des revendications précédentes, **caractérisée en ce que** le stator (1, 1', 1", 20) est constitué d'un matériau composite à magnétisme doux.

13. Machine électrique selon l'une des revendications précédentes, **caractérisée par** un autre rotor (19), un autre stator (21), un autre dispositif de production d'un champ tournant et un autre dispositif (23) de production d'un champ polaire, l'autre rotor (19) pouvant tourner autour de l'axe de rotation qui traverse deux autres parties opposées de l'autre rotor, l'autre dispositif (23) de production d'un champ polaire étant conçu pour produire un autre champ magnétique qui polarise l'autre rotor (19) en des sens opposés sur les autres parties opposées, l'autre dispositif de production d'un champ polaire comprenant au moins un aimant (23).

14. Machine électrique selon l'une des revendications précédentes, **caractérisée par** l'utilisation de la machine électrique comme moteur électrique ou comme générateur électrique.

15. Pompe dotée d'une machine électrique selon l'une des revendications 1 à 13 utilisée comme moteur électrique.
